# EUROPÄISCHE PATENTSCHRIFT

(11) **EP 0 503 228 B1**
(45) Veröffentlichungstag und Bekanntmachung des Hinweises auf die Patenterteilung: **21.06.1995**
(21) Anmeldenummer: 92100544.3
(22) Anmeldetag: 15.01.1992
(51) Int. Cl.: B27K 3/38

(54) **Insektizid wirkendes Holzschutzmittel**
Insecticidally active wood preservative
Agent préservateur du bois avec activité insecticide

(30) Priorität: 13.03.1991 DE 4108090
(43) Veröffentlichungstag der Anmeldung: 16.09.1992
(73) Patentinhaber: RÜTGERSWERKE AKTIENGESELLSCHAFT, 60326 Frankfurt (DE)
(72) Erfinder: Härtner, Helmut, Dr., W-6940 Weinheim (DE); Spatz, Andreas, W-6800 Mannheim 11 (DE); Barth, Volker, Dr., W-6700 Ludwigshafen 29 (DE)

(56) Entgegenhaltungen:
- FR-A- 2 445 203
- FR-A- 2 634 974
- CHEMICAL PATENTS INDEX, BASIC ABSTRACTS JOURNAL Section Ch, Week B16, 14. Juni1979 Derwent Publications Ltd., London, GB; Class C, AN 30687B/16
- CHEMICAL PATENTS INDEX, BASIC ABSTRACTS JOURNAL Section Ch, Week 8614, 28.April 1986 Derwent Publications Ltd., London, GB; Class C, AN 86-091190

## Beschreibung

Die Erfindung betrifft insektizid wirkende Holzschutzmittel, die als wesentliche Wirkkomponente ein oder mehrere Pyrethroide enthalten.

Die Verwendung von Pyrethroiden in Holzschutzmitteln ist aus Seifen-Öle-Fett-Wachse 111 (1985), S. 617-619 und 649-652 bekannt. In diesen Mitteln sind die Pyrethroide bevorzugt in Lösemitteln, insbesondere in aromatischen Lösemitteln wie Toluol oder Xylol gelöst.

Da derartige Mittel aber meist auf das Holz aufgesprüht werden und die Lösemittel verdampfen, besteht eine große Belastung für die Umwelt und die Gesundheit der mit der Applikation der Mittel betrauten Personen. Darüberhinaus besteht durch die Lösungsmitteldämpfe eine erhöhte Explosionsgefahr.

Es hat nicht an Versuchen gefehlt, die Lösemittel durch Wasser ganz oder wenigstens teilweise zu ersetzen um so die Gefährdung durch entsprechende Holzschutzmittel zu reduzieren. Jedoch hatten bislang hergestellte wäßrige Emulsionen, wie sie aus JP-A 54 032 623, JP-A 61 037 702 oder FR-A 2 634 974 zur Verwendung als insektizide Mittel bekannt sind, den Nachteil, daß die Pyrethroide nicht tief genug in das Holz eindrangen, und daß eine ausreichende Langzeitwirksamkeit nicht gegeben war. Maßstab hierfür ist die Prüfnorm EN-22, die von bislang bekannten wäßrigen Emulsionen von Pyrethroiden nicht erfüllt wurde.

So zeigen auch in Seifen-Öle-Fette-Wachse 111 (1985), S. 618 erwähnte Cypermethrin-Emulsionen, die nach der Norm EN-22 geprüft wurden, nicht zufriedenstellende Abtötungsraten von Hausbocklarven.

Auch gemäß FR-A 2 445 203 werden Emulsionen von Pyrethroiden nur gegen Angriffe von Schädlingen, die von außen kommen, eingesetzt. Dort, wo eine Tiefenwirkung im Holz gefordert ist, werden nicht wäßrige Lösungen der Pyrethroide in das Holz injiziert.

Es ist daher Aufgabe der Erfindung, insektizid wirkende Holzschutzmittel bereitzustellen, die als wesentliche Wirkkomponente ein oder mehrere Pyrethroide enthalten, die aber im wesentlichen frei sind von organischen Lösemitteln, die als wäßrige Emulsionen appliziert werden, dennoch ausreichend tief in Holz eindringen, so daß die gewünschte Langzeitwirksamkeit gegeben ist.

Die Lösung der Aufgabe erfolgt durch insektizid wirkende Holzschutzmittel gemäß der Ansprüche 1 bis 3, durch Verfahren zu ihrer Herstellung, insbesondere über Konzentrate, die mit Wasser verdünnt werden, gemäß Anspruch 4, sowie durch Konzentrate gemäß der Ansprüche 5 bis 9.

Es wurde gefunden, daß insektizid wirkende Mittel, die ein oder mehrere Pyrethroide in Wasser emulgiert enthalten und die zudem Alkylphenolpolyglykolether und Fettsäureester von Polyalkoholen in einem bestimmten Verhältnis als Emulgiermittel enthalten, ausreichend tief in Holz eindringen und eine ausreichende Langzeitwirksamkeit besitzen. Diese Holzschutzmittel erfüllen die Anforderungen gemäß der Norm EN-22.

Als Pyrethroide können sowohl natürliche als auch synthetischen Pyrethoide eingesetzt werden.

Beispiele für synthetische Pyrethroide sind Dimethrin, Resmethrin, Phenothrin insbesondere aber Permethrin, Decamethrin, Cypermethrin, Cyfluthrin, Fenfluthrin und Fenvalerat. Die Pyrethroide sind in den erfindungsgemäßen Holzschutzmitteln im allgemeinen als Isomerengemische enthalten, wobei ihre Konzentration im anzuwendenden Mittel im Bereich von 0,001 bis 0,5 Gew.-% liegt. Den Pyrethroiden können die an sich für Pyrethroide bekannten Synergisten wie z. B. Piperonylbutoxid, Sesamex, Sesamöl, Sulfoxid oder Octachlordipropylether in den an sich üblichen Mengen von 1 : 5 bis 10 zugegeben werden.

Außerdem können die erfindungsgemäßen Holzschutzmittel fungizide Wirkstoffe enthalten wie z. B. solche, die in Ullmann's Encyclopedia of Industrial Chemistry, Fifth Edition, Volume A 12, Seiten 86 bis 113 beschrieben sind, aber auch quartäre Ammonium- oder Phosphoniumverbindungen oder polymere quartäre Ammoniumborate, wie sie z. B. aus DE-A 38 27 721 bekannt sind. Die erfindungsgemäßen Holzschutzmittel können zudem weitere Insektizide enthalten. Beispiele hierfür sind Lindan, Altrin oder Phosphorsäureester.

Als Emulgiermittel enthalten die erfindungsgemäßen Holzschutzmittel eine Kombination von zwei unterschiedlichen, handelsüblichen Emulgatoren: Alkylphenolpolyglykolethern und Fettsäureestern von Polyalkoholen. Alkylphenolpolyglykolether sind sowohl Polyethylenglykol- als auch Polypropylenglykolether von Alkylphenolen, wobei die Alkylkette im allgemeinen 8 bis 15 C-Atome enthält und der Alkoxylierungsgrad im Bereich von 10 bis 20 liegt. Derartige Produkte sind z. B. unter den Bezeichnungen Igepal®, Sterox® oder Triton® im Handel.

Fettsäureester von Polyalkoholen sind insbesondere Mono- oder Di-Fettsäureester von Glycerin, Polyglycerin oder Glycerinpolyethylen- oder -polypropylenglykolethern. Derartige Produkte sind z. B. unter den Bezeichnungen Aldo®, Atmos®, Kessco®, Myverol® oder Witconol® im Handel.

Für die Herstellung einer guten Mikroemulsion der Pyrethroide und zur Erzielung einer guten Eindringtiefe des Holzschutzmittels in Holz ist es wichtig, daß die beiden Emulgatoren in einem bestimmten Verhältnis zueinander vorliegen. Die Holzschutzmittel sollen die Fettsäureester von Polyalkoholen und die Alkylphenolpolyglykolether im Gewichtsverhältnis von 1 : 1 bis 1 : 5 enthalten, in einer Gesamtmenge von 0,04 bis 19,8 Gew.-%, bezogen auf das fertige Holzschutzmittel.

Die erfindungsgemäßen Holzschutzmittel können durch Vermischen aller Einzelkomponenten miteinander hergestellt werden. Dies ist jedoch aus praktischen Gründen nicht vorteilhaft. Vielmehr ist es günstig, vorab ein Konzentrat herzustellen, das ein oder mehrere Pyrethroide, Fettsäureester von Polyalkoholen, Alkylphenolpolyglykolether und evtl. weitere Zusatzstoffe enthält, und dieses kurz vor Gebrauch mit Wasser oder einer wäßrigen Lösung eines fungiziden Wirkstoffs im Verhältnis 1 : 5 bis 1 : 1.000 zu vermischen. Dabei ist ein einfaches Vermischen, etwa durch Einrühren in Wasser, bei Raumtemperatur ausreichend, um die gewünschte Mikroemulsion zu erhalten. Das Mittel ist gebrauchsfertig und kann durch alle an sich bekannten Applikationsverfahren wie Tauchen, Streichen, oder Sprühen auf das Holz aufgebracht werden.

Derartige Konzentrate enthalten im einfachsten Fall 1 bis 5 Gew.-% eines oder mehrerer Pyrethroide und 40 bis 99 Gew.-% Fettsäureester von Polyalkoholen und Alkylphenolpolyglykolether neben evtl. weiteren Zusatzstoffen wie Lösemitteln, Polypropylenglykolether, Synergisten oder fungiziden Wirkstoffen.

Fettsäureester von Polyalkoholen und Alkylphenolpolyglykolether liegen dabei im Gewichtsverhältnis von 1 : 1 bis 1 : 5 vor.

Lösemittel sind in dem Konzentrat eigentlich nicht notwendig. Es hat sich jedoch gezeigt, daß die Herstellung des Konzentrats am einfachsten ist, wenn dem Gemisch der beiden Emulgatoren bis zu 60 Gew.-% einer Lösung oder einer Emulsion des oder der Pyrethroide in einem organischen Lösemittel zugegeben werden. Da keine echte Lösung der Pyrethroide gefordert ist, kann hierzu jedes der üblichen Lösemittel verwendet werden.

Es wurde jedoch gefunden, daß auch diese Lösemittel einen Einfluß auf die später herzustellende wäßrige Emulsion haben. So verschlechtern z. B. Aromaten die Eindringtiefe der wäßrigen Mikroemulsion, während die besten Ergebnisse mit aromatenarmen, unpolaren Lösemitteln oder Lösemittelgemischen, wie z. B. Testbenzin erhalten werden.

Ein demgemäßes Konzentrat wird z. B. hergestellt durch Vermischen von 20 bis 30 Gew.-% einer 5 bis 20 %-igen Lösung eines Pyrethroids in Testbenzin mit
- 20 bis 30 Gew.-%: Fettsäureester eines Glycerinpolyethylenglykolethers
und
- 60 bis 40 Gew.-%: Alkylphenolpolyglykolether.

Fungizide Wirkstoffe können dem Konzentrat beigefügt werden. Sie können aber auch, insbesondere wenn es sich um salzartige Fungizide, z. B. um Bor- oder Kupfersalze handelt, in dem Wasser gelöst werden, mit dem das Konzentrat emulgiert wird.

Beim Vermischen einer Emulsion von Pyrethroid(en) in Testbenzin mit Emulgatoren der beiden Gruppen entsteht das Konzentrat in Form einer hochviskosen, klaren Lösung. Um die Viskosität dieser Lösung herabzusetzen, ist es zweckmäßig, ihr etwa 10 bis 15 Gew.-% Polyethylen- oder Polypropylenglykol zuzugeben. Dies hat den weiteren Vorteil, daß beim späteren Verdünnen des Konzentrats mit Wasser, die Mikroemulsion noch verbessert wird.

### Beispiele

### Beispiel 1

In einem offenen Gefäß werden 25 Gewichtsteile einer 10 %-igen Lösung von Permethrin (Isomerengemisch) in Testbenzin mit 25 Gewichtsteilen eines Fettsäurediesters eines Glycerinpolyethylenglykolethers (Marlowet® SLS) und 50 Gewichtsteilen eines Alkylphenolpolyglykolethers (Marlowet® ISM) mit Hilfe eines Flügelrührers (100 U/min) vermischt.

Es entsteht eine klare, hochviskose Lösung, die unbeschränkt lagerfähig ist.

### Beispiel 2

100 Gewichtsteile der in Beispiel 1 hergestellten Lösung (Konzentrat) werden mit 900 Gewichtsteilen Wasser versetzt und kurz umgerührt. Es entsteht eine Mikroemulsion, die mehrere Wochen lang stabil ist.

### Beispiel 3

100 Gewichtsteile der in Beispiel 1 hergestellten Lösung (Konzentrat) werden mit 900 Gewichtsteilen einer wäßrigen Lösung von Borsäure und Boraten mit einem Borgehalt von 3 Gew.-% versetzt und kurz umgerührt. Es entsteht eine Mikroemulsion, die mehrere Wochen lang stabil ist.

### Beispiel 4

25 Gewichtsteile einer 10 %igen Lösung von Decamethrin in Ethylenglykoldimethylether werden analog zu Beispiel 1 mit 30 Gewichtsteilen eines Fettsäurediesters eines Glycerinpolyethylenglykolethers und 45 Gewichtsteilen eines Alkylphenolpolyglykolethers vermischt.

100 Gewichtsteile der so hergestellten Lösung (Konzentrat) werden mit 9.000 Gewichtsteilen Wasser versetzt und kurz umgerührt. Es entsteht eine Mikroemulsion, die mehrere Wochen lang stabil ist.

### Beispiel 5

Mit den Mikroemulsionen aus den Beispielen 2 bis 4 werden Probehölzer gemäß der europäischen Norm EN-22 imprägniert und gegenüber Larven von Hylotrupes bajulus getestet.

Bei einer aufgebrachten Menge von 350 g/m² wird mit allen Mikroemulsionen nach einer Inkubationszeit von 24 Wochen eine Mortalität von 90 % erzielt. Die Erfordernisse der Norm werden erfüllt.

Die Eindringtiefe in das Holz liegt bei allen 3 Mikroemulsionen bei 15 bis 16 mm.

Die Emulsion aus Beispiel 3 ist zusätzlich noch fungizid wirksam.

## Patentansprüche

1. Insektizid wirkende Holzschutzmittel auf der Basis wäßriger Emulsionen von Pyrethroiden, **dadurch gekennzeichnet,** daß sie Fettsäureester von Polyalkoholen und Alkylphenolpolyglykolether im Gewichtsverhältnis von 1:1 bis 1:5 als Emulgatoren enthalten.

2. Insektizid wirkende Holzschutzmittel nach Anspruch 1, **dadurch gekennzeichnet,** daß sie zusätzlich sog. Synergisten und/oder Fungizide und/oder weitere Insektizide enthalten.

3. Insektizid wirkende Holzschutzmittel nach einem der Ansprüche 1 und 2, **dadurch gekennzeichnet**, daß sie 0,001 bis 0,5 Gew.-% Pyrethroide enthalten.

4. Verfahren zur Herstellung von Holzschutzmitteln gemäß der Ansprüche 1 bis 3**, dadurch gekennzeichnet,** daß ein Konzentrat enthaltend ein oder mehrere Pyrethroide Alkylphenolpolyglykolether und Fettsäureester von Polyalkoholen und evt. weitere Zusatzstoffe mit Wasser oder einer wäßrigen Lösung eines fungiziden Wirkstoffs im Verhältnis 1:5 bis 1:1.000 vermischt wird.

5. Konzentrate gemäß Anspruch 4, **dadurch gekennzeichnet,** daß sie 1 bis 5 Gew.-% eines oder mehrerer Pyrethroide und 40 bis 99 Gew.-% Alkylphenolplyglykolether und Fettsäureester von Polyalkoholen enthalten, wobei Fettsäureester von Polyalkoholen und Alkylphenolpolyglykolether im Gewichtsverhältnis von 1:1 bis 1:5 vorliegen.

6. Konzentrate nach Anspruch 5**, dadurch gekennzeichnet**, daß sie zusätzlich bis zu 59 Gew.-% eines aromatenarmen, unpolaren Lösemittels oder Lösemittelgemisches enthalten.

7. Konzentrate nach den Ansprüchen 5 und 6**, dadurch gekennzeichnet,** daß sie zusätzlich Synergisten und/oder Fungizide enthalten.

8. Konzentrate nach einem der Ansprüche 5 bis 7, hergestellt durch Vermischen einer Lösung oder Emulsion eines Pyrethroids in einem aromatenarmen Lösemittel mit Alkylphenolpolyglykolether und Fettsäureester von Polyalkoholen.

9. Konzentrate nach Anspruch 8, hergestellt durch Vermischen von 20 bis 30 Gew.-% einer 5 bis 20 %igen Lösung oder Emulsion eines Pyrethroids in Testbenzin, 20 bis 30 Gew.-% Fettsäurediester eines Glycerinpolyethylenglykolethers, 60 bis 40 Gew.-% Alkylphenolpolyglykolether.

## Claims

1. Insecticidally active wood preservatives based on aqueous emulsions of pyrethroids, characterized in that they contain fatty acid esters of polyalcohols and alkylphenol polyglycolethers as emulsifiers in a weight ratio of 1 : 1 to 1 : 5.

2. Insecticidally active wood preservatives according to claim 1, characterized in that they additionally contain so-called synergists and/or fungicides and/or further insecticides.

3. Insecticidally active wood preservatives according to one of claims 1 and 2, characterized in that they contain from 0.001 to 0.5 % by weight of pyrethroids.

4. A process for the preparation of insecticidally active wood preservatives according to one of claims 1 to 3, characterized in that a cencentrate containing one or more pyrethroids, alkylphenol polyglycolether and fatty acid ester or polyalcohols and possibly further additives is mixed with water or an aqueous solution of a fungicidal active substance in a ratio of from 1 : 5 to 1 : 1,000.

5. Concentrates according to claim 4, characterized in that they contain from 1 to 5 % by weight of one or more pyrethroids and from 40 to 99 % by weight of alkylphenol polyglycolethers and fatty acid esters of polyalcohols, fatty acid esters of polyalcohols and alkylphenol polyglycolethers being present in a ratio by weight of from 1 : 1 to 1 : 5.

6. Concentrates according to claim 5, characterized in that they additionally contain up to 59 % by weight of a non-polar solvent or mixture of solvents having few aromatic compounds.

7. Concentrates according to claims 5 and 6, characterized in that they additionally contain synergists and/or fungicides.

8. Concentrates according to one of claims 5 to 7, prepared by mixing a solution or emulsion of a pyrethroid in a solvent - having few aromatic compounds - with alkylphenol polyglycolether and fatty acid ester of polyalcohols.

9. Concentrates according to claim 8, prepared by mixing from 20 to 30 % by weight of a 5 to 20 % solution or emulsion of a pyrethroid in white spirit, from 20 to 30 % by weight of fatty acid diesters of a glycerine polyethylene glycolether, and from 60 to 40 % by weight of alkylphenol polyglycolether.

## Revendications

1. Agents préservateurs du bois avec activité insecticide à base de pyréthroides en émulsion dans l'eau, caractérisés en ce qu'ils contiennent des éthers d'acide gras de polyalcools et des alkylphénolpolyglycoléthers servant d'agents d'émulsification en une relation de poids de 1 : 1 à 1 : 5.

2. Agents préservateurs du bois avec activité insecticide selon la revendication 1, caractérisés en ce qu'ils contiennent de plus des synergists et/ou fongicides et/ou d'autres insecticides.

3. Agents préservateurs du bois avec activité insecticide selon l'une des revendications 1 ou 2, caractérisés en ce qu'ils contiennent 0,001 jusqu'à 0,5 % en poids de pyréthroides.

4. Procédé pour la préparation d'agents préservateurs du bois selon les revendications 1 à 3, caractérisés en ce qu'un concentré contenant un ou plusieurs pyréthroides, des alkylphénolpolyglycoléthers et des esters d'acide gras des polyalcools et éventuellement d'autres additifs sont mélangés à l'eau ou à une solution aqueuse d'une substance fongicide dans un rapport de 1 : 5 jusqu'à 1 : 1000.

5. Concentrés selon la revendication 4, caractérisés en ce qu'ils contiennent 1 jusqu'à 5 % en poids d'un ou de plusieurs pyréthroides et 40 jusqu'à 99 % en poids d'alkylphénolpolyglycoléthers et d'esters d'acide gras de polyalcools, les esters de l'acide gras des polyalcools et les alkylphénolpolyglycoléthers se présentant dans un rapport pondéral de 1 : 1 jusqu'à 1 : 5.

6. Concentrés selon la revendication 5, caractérisés en ce qu'ils contiennent de plus jusqu'à 59 % en pods d'un solvant ou d'un mélange de solvant faiblement aromatique, apolaire.

7. Concentrés selon les revendications 5 et 6, caractérisés en ce qu'ils contiennent de plus des synergistes et/ou des fongicides.

8. Concentrés selon l'une des revendications 5 à 7, préparés par mélange d'une solution ou d'une émulsion d'un pyréthroide dans un solvant faiblement aromatique avec l'alkylphénolpolyglycoléther et l'ester d'acide gras des polyalcools.

9. Concentrés selon la revendication 8, préparés par mélange de 20 à 30 % en poids d'une solution ou émulsion de 5 jusqu'à 20 % d'un pyréthroide dans du white spirit, 20 jusqu'à 30 % en poids de diester d'acide gras d'un glycérolpolyéthyléneglycoléther, 60 à 40 % en poids d'alkylphénolpolyglycoléther.
